# EUROPÄISCHE PATENTSCHRIFT

(11) **EP 0 557 864 B1**
(45) Veröffentlichungstag und Bekanntmachung des Hinweises auf die Patenterteilung: **17.05.1995**
(21) Anmeldenummer: 93102403.8
(22) Anmeldetag: 16.02.1993
(51) Int. Cl.: B60R 22/28, B60R 22/46, F16F 7/12

(54) **Energiewandler in einem Rückhaltesystem für Fahrzeuginsassen**
Energy convector in a vehicle occupant restraint system
Convertisseur d'énergie dans un système de retenue pour occupants de véhicule

(30) Priorität: 27.02.1992 DE 4206117
(43) Veröffentlichungstag der Anmeldung: 01.09.1993
(73) Patentinhaber: TRW Occupant Restraint Systems GmbH, 73553 Alfdorf (DE)
(72) Erfinder: Föhl, Artur, W-7060 Schorndorf (DE)
(74) Vertreter: Degwert, Hartmut, Dipl.-Phys.

(56) Entgegenhaltungen:
- EP-A- 0 398 010
- DE-A- 2 349 891
- DE-A- 2 364 235
- DE-A- 3 900 024
- US-A- 3 026 972

## Beschreibung

Die Erfindung betrifft einen Energiewandler in einem Rückhaltesystem für Fahrzeuginsassen, mit einem rohrförmigen Wandlerkörper aus plastisch verformbarem Material und einer in diesem aufgenommenen Verformungseinrichtung, an der ein Zug- oder Schubmittel angeschlossen ist und die wenigstens ein Deformationsglied aufweist, das bei Verschiebung der Verformungseinrichtung in dem Wandlerkörper in einer bestimmten Richtung mit der Wandung des Wandlerkörpers in Eingriff gelangt und bei weiterer Verschiebung die Wandung plastisch verformt, wobei die Verformungseinrichtung eine Platte aufweist, an deren radial äußerem Ende das bzw. die Deformationsglieder gebildet sind, die in einer Arbeitsstellung mit der Innenseite des Wandlerkörpers in Eingriff stehen.

Ein solcher Energiewandler hat die Aufgabe, Belastungsspitzen in einem Sicherheitsgurtsystem während der Vorwärtsverlagerung eines Fahrzeuginsassen bei einem Fahrzeugaufprall abzubauen. Besonders wirksam ist der Einsatz eines solchen Energiewandlers in Kombination mit einem Gurtstraffer, der die Gurtlose beseitigt, bevor die Vorverlagerung des Fahrzeuginsassen beginnt. Es steht dann für die Vorverlagerung des Fahrzeuginsassen und die gleichzeitig erfolgende Energiewandlung eine ausreichende Bewegungsstrecke zur Verfügung.

Bei einem aus der DE-A-23 64 235 bekannten Energiewandler der eingangs genannten Art ist an einem in einem Zylinder geführten Kolben eine Reihe von sternförmig angeordneten Schermessern angebracht, die so ausgerichtet sind, daß sie bei einer Bewegung des Kolbens in der einen Richtung aus der Innenwand des Zylinders Späne abheben. Die Schermesser bilden zusammen eine kreisrunde Platte, deren Durchmesser etwas größer als der Innendurchmesser des Zylinders ist. Diese Platte wird derart unter Spannung in den Zylinder eingebracht, daß sie eine Wölbung erfährt, wodurch die Schermesser nur in der einen Richtung die spanabhebende Wirkung entfalten, während die fest am Kolben angebrachte Platte bei einer Bewegung des Kolbens in der anderen Richtung mit dem abgebogenen Rand an der Innenwand des Zylinders entlanggleitet.

Ein in der EP 0 422 410 A1 beschriebener Energiewandler, der auch als Kraftbegrenzer bezeichnet wird, besteht aus einem Zylinder aus plastisch verformbarem Material, worin eine Stange aufgenommen ist, die an ihrem einen Ende aus dem Zylinder herausragt und an ihrem anderen Ende einen Freiraum abgrenzt, in dem mehrere Wälzkörper aufgenommen sind. Der Außendurchmesser der durch die Wälzkörper gebildeten Ringanordnung ist größer als der Innendurchmesser der Zylinderbohrung. Unter hoher Zuglast zwischen Zylinder und Stange dringen die Wälzkörper in das Material der Zylinderwandung ein, wobei unter Bildung von Längsrillen Verformungsarbeit geleistet wird, durch die ein hoher Energiebetrag umgesetzt wird und Belastungsspitzen im Gurtsystem abgebaut werden.

Die mit einem solchen Energiewandler erreichbare Begrenzung der im Gurtsystem auftretenden Lastspitzen trägt wesentlich zur Minderung des Verletzungsrisikos bei, was anhand von Belastungsmessungen an sogenannten Dummies nachgewiesen werden kann. Es wurde jedoch festgestellt, daß die Belastungsspitzen im Gurtsystem durch einen solchen Energiewandler zwar begrenzt, jedoch nicht vermieden werden können.

Der Erfindung liegt die Aufgabe zugrunde, einen Energiewandler der eingangs angegebenen Art dahingehend zu verbessern, daß die Belastungsspitzen im Gurtsystem weiter reduziert und nahezu beseitigt werden, so daß eine nahezu konstante oder in einem gewünschten Maße stetig ansteigende Last im Gurtsystem auftritt.

Zur Lösung dieser Aufgabe wird erfindungsgemäß vorgeschlagen, daß die Platte zwischen einer gegen die Achse des Wandlerkörpers geneigten Ruhestellung und der aufgerichteten, zur Achse des Wandlerkörpers senkrechten Arbeitsstellung verschwenkbar ist.

Diese erfindungsgemäße Ausbildung zeichnet sich durch konstruktive Einfachheit und geringe Herstellungskosten aus. Weiterhin ist sie insbesondere für eine Kraftbegrenzung auf einem Niveau innerhalb eines Bereiches von etwa 5.000 bis 12.000 N ausgelegt. Kräfte in diesem Bereich treten am Gurtschloß auf; da am Gurtschloß Kräfte über zwei Gurtbandabschnitte eingeleitet werden, nämlich Schultergurt und Beckengurt, ist dort das Kraftniveau doppelt so hoch wie beispielsweise in dem Gurtbandabschnitt zwischen Umlenkbeschlag und Gurtaufroller. Der Energiewandler nach der vorliegenden Erfindung ist daher besonders für den Einsatz im Bereich zwischen dem Gurtschloß und seiner Verankerung am Fahrzeug bestimmt.

Die Erfindung beruht auf der Erkenntnis, daß zur Vermeidung von Lastspitzen im Gurtsystem gewährleistet sein muß, daß die Energiewandlung durch plastische Verformung des Materials des Wandlerkörpers stetig und ruckfrei erfolgt. Um dies zu erreichen, ist es günstig, wenn die Deformationsglieder deutlich tiefer als die Wälzkörper der bekannten Energiewandler in das Material des Wandlerkörpers eindringen. Es wird dann vermieden, daß die Wandung des Wandlerkörpers zunächst elastisch nachgibt und dann annähernd polygonförmig verformt wird, bevor die Deformationsglieder in das Material der Wandung des Wandlerkörpers eindringen. Es wurde gefunden, daß abrupte Schwankungen des wegabhängigen Kraftverlaufs weitgehend vermieden werden, wenn überwiegend eine plastische Verformung der Wandung des rohrförmigen Wandlerkörpers auftritt und elastische Verformungen weitgehend unterbunden werden.

Verschiedene Weiterbildungen und Ausführungsformen sind in den Unteransprüchen angegeben.

Weitere Merkmale und Vorteile der Erfindung ergeben sich aus der folgenden Beschreibung mehrere Ausführungsformen und aus der Zeichnung, auf die Bezug genommen wird. In der Zeichnung zeigen:
- Fig. 1: einen schematischen Teil-Längsschnitt des Energiewandlers gemäß einer erfindungsgemäßen Ausführungsform;
- Fig. 2: einen Querschnitt des in Fig. 1 gezeigten Energiewandlers nach erfolgter plastischer Verformung des rohrförmigen Wandlerkörpers;
- Fig. 3: einen schematischen Teil-Längsschnitt des in den Figuren 1 und 2 gezeigten Energiewandlers nach erfolgter plastischer Verformung des rohrförmigen Wandlerkörpers;
- Fig. 4: eine Perspektivansicht einer als Platte ausgebildeten Verformungseinrichtung bei der Ausführungsform nach den Figuren 1 bis 3;
- Fig. 4a: eine Variante der Ausführungsform nach den Figuren 1 bis 4, bei welcher ein im Querschnitt rechteckförmiger Wandlerkörper verwendet wird;
- Fig. 5a bis 5c: drei Ausführungsformen des Energiewandlers mit verschiedener Ausbildung des rohrförmigen Wandlerkörpers; und
- Fig. 6a bis 6c: Diagramme, die für die Ausführungsformen nach den Figuren 5a bis 5c den Verlauf der Kraft in Abhängigkeit von der Wegstrecke zeigen.

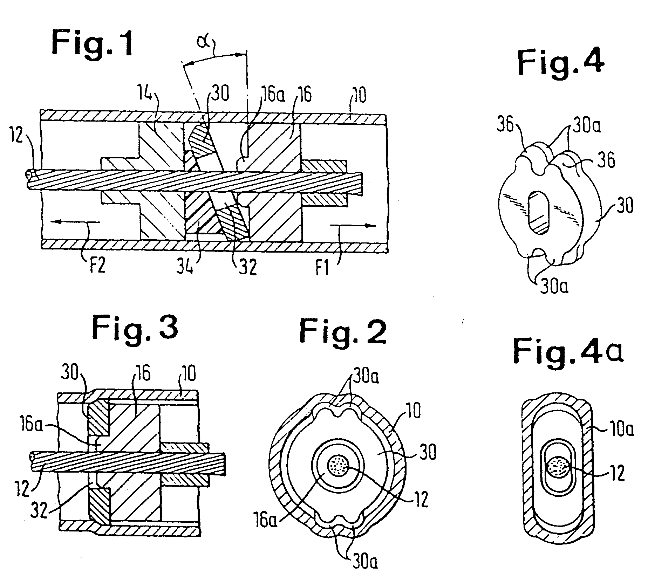

In einem rohrförmigen Wandlerkörper 10 von kreisrundem Querschnitt ist auf einem Zugseil 12 eine Verformungseinrichtung angeordnet, die zwei auf dem Zugseil 12 hintereinander im Abstand voneinander befestigte Kolbenelemente 14, 16, eine Platte 30 und ein keilförmiges Führungsteil 34 umfaßt. Die Kolbenelemente 14, 16 sind in dem rohrförmigen Wandlerkörper 10 verschiebbar. Die Platte 30 besitzt eine mittige Aussparung 32 für den Durchgang des Zugseils 12, aber auch zur Aufnahme eines zylindrischen Zentrieransatzes 16a an der gegenüberliegenden Stirnfläche des Kolbenelements 16. Durch das keilförmige Führungsteil 34 aus elastischem Material wird die Platte 30 in einer zur Achse des rohrförmigen Wandlerkörpers 10 unter einem Winkel α von etwa 30° geneigten Ruhestellung gehalten, wobei sie an ihren beiden symmetrisch einander gegenüberliegenden Enden mit der Innenseite der Wandung des Wandlerkörpers 10 in Berührung kommt. Wie aus den Figuren 2 und 4 ersichtlich ist, weist die Platte 30 an diesen einander symmetrisch gegenüberliegenden Enden je zwei benachbarte Vorsprünge 30a auf, die auf ihrer dem Kolbenelement 14 zugewandten Seite mit einer Anschrägung 36 versehen sind. Die VorSprünge 30a bilden die Defromationsglieder, wobei die Anschrägungen 36 ein sanftes Eindringen in das Material der Wandung des Wandlerkörpers 10 ohne Spanbildung oder Schneideffekt gewährleisten.

In einem Sicherheitsgurtsystem wird der rohrförmige Wandlerkörper 10 beispielsweise am Fahrzeug verankert, und an dem Zugseil 12 wird das Gurtschloß angeschlossen. Die in Fig. 1 gezeigte Kolben/Zylinder-Einrichtung kann zugleich den Linearantrieb eines am Gurtschloß angreifenden Gurtstraffers bilden. Bei einer solchen Ausführung wird das Kolbenelement 16 in dem durch den rohrförmigen Wandlerkörper 10 gebildeten Zylinder mit dem Druck der durch einen pyrotechnischen Gasgenerator erzeugten Gase beaufschlagt, so daß die Kolbenelemente 14, 16 in Fig. 1 in Richtung eines Pfeils F1 im Inneren des rohrförmigen Wandlerkörpers 10 verschoben werden, wobei das Zugseil 12 und folglich das daran angeschlossene Gurtschloß mitgenommen werden. Bei einer Bewegung der Kolbenelemente 14, 16 in Richtung eines Pfeiles F1 in Fig. 1 verbleibt die Platte 30 in ihrer geneigten Ruhestellung. Nach erfolgter Gurtstraffung beginnt die Vorverlagerung des durch das Gurtsystem gesicherten Fahrzeuginsassen, wobei ein Zug über das Zugseil 12 in Richtung des Pfeils F2 in Fig. 1 auf die Kolbenelemente 14, 16 ausgeübt wird. Dabei richtet sich die Platte 30, die mit ihren Vorsprüngen 30a elastisch in Anlage an der Innenseite der Wandung des Wandlerkörpers 10 gehalten wird, auf und dringt mit diesen Vorsprüngen 30a in das Material der Wandung des Wandlerkörpers 10 ein. Die Figuren 2 und 3 zeigen den Zustand nach erfolgter Verformung des Wandlerkörpers 10.

Die Figuren 2 und 3 zeigen den Zustand des Energiewandlers nach erfolgter Verformung des rohrförmigen Wandlerkörpers 10, der einen kreisrunden Querschnitt aufweist.

Eine besonders flache Bauform ist mit der in Fig. 4a gezeigten Ausführungsform zu erreichen. Dort ist der Wandlerkörper 10a im unverformten Zustand von rechteckiger Querschnittsform und nach erfolgter Verformung annähernd oval.

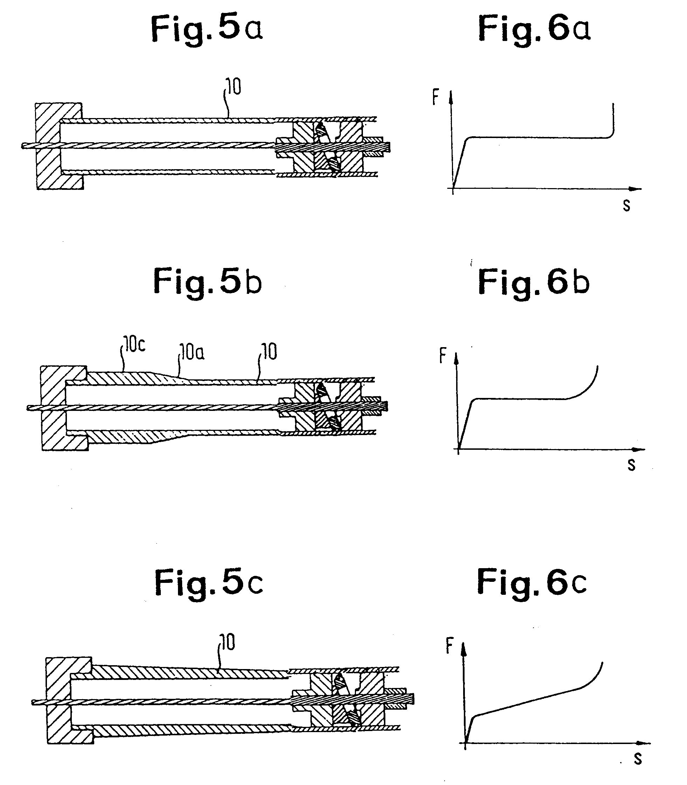

Wenn die Wandstärke des rohrförmigen Wandlerkörpers 10 konstant ist, wie in Fig. 5a dargestellt, tritt der im Diagramm der Fig. 6a gezeigte Verlauf der Kraft F in Abhängigkeit von der Wegstrecke s auf. Die Kraft F ist diejenige, die bei der Verschiebung der Kolbenelemente 14, 16 mit der Platte 30 in dem rohrförmigen Wandlerkörper 10 aufgebracht werden muß, und die Wegstrecke s ist die der Verschiebung dieser Kolbenelemente 14, 16 mit der Platte 30 im Inneren des Wandlerkörpers 10. Wie aus Fig. 6a ersichtlich ist, nimmt die Kraft F von Null ausgehend stetig bis zu einem maximalen Wert zu, der bereits nach einem Bruchteil der gesamten zur Verfügung stehenden Wegstrecke erreicht ist. Besonders beachtenswert ist, daß der Verlauf der Kraft F von Spitzen und Einbrüchen weitgehend frei ist. Hierin unterscheidet sich der erfindungsgemäße Energiewandler ganz erheblich vom Stand der Technik mit einer Vielzahl von einzelnen Deformationsgliedern, die nur wenig in das Material des Wandlerkörpers 10 eindringen. Bei der in Fig. 5a gezeigten Ausführungsform mit konstanter Wandstärke des Wandlerkörpers 10 bleibt die Kraft F anschließend nahezu konstant, bis der Endanschlag des Wandlerkörpers 10 erreicht ist.

Bei der in Fig. 5b gezeigten Ausführungsform ist die Wandstärke des Wandlerkörpers 10 über etwa die Hälfte seiner Länge konstant und nimmt dann auf einem Abschnitt 10a stetig auf etwa den doppelten Wert zu, um anschließend in einem Abschnitt 10c konstant zu bleiben. Fig. 6b zeigt den zugehörigen Verlauf der Kraft F in Abhängigkeit von der Wegstrecke s. Im Unterschied zu Fig. 6a nimmt die Kraft F nach Durchlaufen etwa der halben Wegstrecke s zu und erreicht kurz vor dem Ende des Wandlerkörpers ihren Höchstwert.

Bei der Ausführungsform nach Fig. 5c nimmt die Wandstärke des Wandlerkörpers 10 von dessen Anfang zu dessen Ende stetig zu. Fig. 6c zeigt den zugehörigen Verlauf der Kraft F in Abhängigkeit von der Wegstrecke s. Man sieht, daß die Kraft F anfangs relativ steil und dann progressiv zunimmt, um allmählich in einen Höchstwert im Bereich des Anschlags am Ende des Wandlerkörpers 10 überzugehen.

Durch geeignete Bemessung der Wandstärke des Wandlerkörpers 10 über seine Länge kann nahezu jeder gewünschte und für einen bestimmten Anwendungsfall geeignete Verlauf der Kraft F in Abhängigkeit von der Wegstrecke s erreicht werden. Bei allen Ausführungen zeigt sich, daß der Kraftverlauf völlig frei von größeren Spitzen oder Einbrüchen ist, wodurch das Verletzungsrisiko ganz entscheidend vermindert wird.

## Patentansprüche

1. Energiewandler in einem Rückhaltesystem für Fahrzeuginsassen, mit einem rohrförmigen Wandlerkörper (10) aus plastisch verformbarem Material und einer in diesem aufgenommenen Verformungseinrichtung, an der ein Zug- oder Schubmittel (12) angeschlossen ist und die wenigstens ein Deformationsglied (30a) aufweist, das bei Verschiebung der Verformungseinrichtung in dem Wandlerkörper (10) in einer bestimmten Richtung (F2) mit der Wandung des Wandlerkörpers (10) in Eingriff gelangt und bei weiterer Verschiebung die Wandung plastisch verformt, wobei die Verformungseinrichtung eine Platte (30) aufweist, an deren radial äußerem Ende das Deformationsglied bzw. die Deformationsglieder (30a) gebildet ist bzw. sind, das bzw. die in einer Arbeitsstellung mit der Innenseite des Wandlerkörpers (10) in Eingriff steht bzw. stehen, dadurch gekennzeichnet, daß die Platte (30) zwischen einer gegen die Achse des Wandlerkörpers (10) geneigten Ruhestellung und der aufgerichteten, zur Achse des Wandlerkörpers (10) senkrechten Arbeitsstellung verschwenkbar ist.

2. Energiewandler nach Anspruch 1, dadurch gekennzeichnet, daß jedes Deformationsglied (30a) auf jeder Seite der Platte (30) durch zwei benachbarte, an ihren radialen Enden verrundete Vorsprünge gebildet ist.

3. Energiewandler nach Anspruch 1 oder 2, dadurch gekennzeichnet, daß jedes Deformationsglied (30a) an seinen Kanten, an denen es in die Wandung des Wandlerkörpers (10) eingreift, mit einer Anschrägung (36) versehen ist.

4. Energiewandler nach einem der Ansprüche 1 bis 3, dadurch gekennzeichnet, daß die Platte (30) durch ein elastisch verformbares Führungsteil (34) in einer Ruhestellung gehalten ist, in welcher ihre Ebene schräg zur Achse des Wandlerkörpers (10) eingestellt ist und ihr oder ihre Deformationsglieder (30a) mit der Wandung des Wandlerkörpers (10) in Berührung steht bzw. stehen.

5. Energiewandler nach Anspruch 4, dadurch gekennzeichnet, daß die Platte (30) zwischen zwei im Abstand voneinander auf dem Zug- oder Schubmittel befestigten Kolbenelementen (14, 16) in einer zur Achse des Wandlerkörpers (10) schrägen Ruhestellung angeordnet ist.

6. Energiewandler nach Anspruch 5, dadurch gekennzeichnet, daß die Platte (30) mit einer mittigen Aussparung (32) versehen ist, in die ein Zentriervorsprung (16a) an einer benachbarten Stirnfläche eines der zwei Kolbenelemente (16) formschlüssig eingreifen kann.

7. Energiewandler nach einem der vorstehenden Ansprüche dadurch gekennzeichnet, daß der rohrförmige Wandlerkörper (10) durch den Zylinder eines pyrotechnischen Kolben/Zylinder-Linearantriebs eines Gurtstraffers gebildet und die Verformungseinrichtung an dem Kolben dieses Linearantriebs angeordnet ist, wobei die Richtung (F2) der Bewegung des Kolbens (16) bei Aktivierung des Linearantriebs entgegengesetzt zu der bestimmten Richtung (F1) ist.

8. Energiewandler nach einem der vorstehenden Ansprüche, dadurch gekennzeichnet, daß die Wandstärke des rohrförmigen Wandlerkörpers (10) in der bestimmten Richtung (F1) in einem Maße ansteigt, das durch einen vordefinierten Verlauf der über das Zug- oder Schubmittel (12) einzuleitenden Kräfte (F) in Abhängigkeit von der Bewegungsstrecke (s) der Verformungseinrichtung im Inneren des Wandlerkörpers (10) bestimmt ist.

9. Energiewandler nach einem der vorstehenden Ansprüche, dadurch gekennzeichnet, daß der rohrförmige Wandlerkörper (10) eine rechteckige Querschnittsform aufweist.

10. Energiewandler nach einem der vorstehenden Ansprüche, dadurch gekennzeichnet, daß er für bei der Verschiebung der Verformungseinrichtung in dem rohrförmigen Wandlerkörper (10) auftretende Kräfte (F) in einem Bereich von etwa 5.000 N bis etwa 12.000 N dimensioniert und insbesondere für die Verwendung zwischen dem Gurtschloß und dessen Verankerungsstelle am Fahrzeug vorgesehen ist.

## Claims

1. Energy converter in a restraining system for vehicle occupants, comprising a tubular converter body (10) of plastically deformable material and a deforming means which is accommodated therein and to which a pulling or thrust means (12) is connected and which comprises at least one deformation member (30a), which on displacement of the deforming means in the converter body (10) in a predetermined direction (F2) comes into engagement with the wall of the converter body (10) and on further displacement deforms the wall plastically, wherein the deforming means comprises a plate (30) at the radially outer end of which the deformation member(s) (30) is/are formed which in an operating position contact(s) the inner side of the converter body (10), characterized in that the plate (30) is pivotal between a rest position inclined to the axis of the converter body (10) and the erected operating position perpendicular to the axis of the converter body (10).

2. Energy converter according to claim 1, characterized in that each deformation member (30a) is formed on each side of the plate (30) by two adjacent projections rounded at their radial ends.

3. Energy converter according to claim 1 or 2, characterized in that each deformation member (30a) is provided with a chamfer (36) at its edges at which it engages into the wall of the converter body (10).

4. Energy converter according to any one of claims 1 to 3, characterized in that the plate (30) is held by an elastically deformable guide member (34) in a rest position in which its plane is disposed inclined to the axis of the converter body (10) and its deformation member(s) (30a) is/are in contact with the wall of the converter body (10).

5. Energy converter according to claim 4, characterized in that the plate (30) is arranged in a rest posititon inclined to the axis of the converter body (10) between two piston elements (14, 16) mounted spaced apart from each other on the pulling or thrust means.

6. Energy converter according to claim 5, characterized in that the plate (30) is provided with a central cutout (32) into which a centering projection (16a) on an adjacent end face of one of the two piston elements (16) can engage in form-fitting manner.

7. Energy converter according to any one of the preceding claims, characterized in that the tubular converter body (10) is formed by the cylinder of a pyrotechnical piston/cylinder linear drive of a belt tightener and the deforming means is arranged on the piston of said linear drive, the direction (F2) of the movement of the piston (16) on activation of the linear drive being opposite to the predetermined direction (F1).

8. Energy converter according to any one of the preceding claims, characterized in that the wall thickness of the tubular converter body (10) rises in the predetermined direction (F1) to an extent which is governed by a predefined profile of the forces (F) to be introduced via the pulling or thrust means (12) as a function of the travel (S) of the deforming means in the interior of the converter body (10).

9. Energy converter according to any one of the preceding claims, characterized in that the tubular converter body (10) has a rectanular cross-sectional form.

10. Energy converter according to any one of the preceding claims, characterized in that it is dimensioned for forces (F) occurring on displacement of the deforming means in the tubular converter body (10) in a range from about 5,000 N to about 12,000 N and in particular provided for use between the buckle and the anchoring point thereof to the vehicle.

## Revendications

1. Convertisseur d'énergie d'un système de retenue des occupants d'un véhicule, comprenant un corps tubulaire (10) de convertisseur en matière plastique déformable, ainsi qu'un dispositif de déformation logé dans ce dernier, auquel un organe de traction ou de poussée (12) est raccordé et qui comprend au moins un appendice de déformation (30a) qui parvient en prise avec la paroi du corps du convertisseur (10) lors d'un déplacement du dispositif de déformation situé dans le corps (10) de convertisseur dans un sens déterminé (F2) et qui, lors de la poursuite du déplacement, provoque une déformation plastique de la paroi, le dispositif de déformation comprenant une plaque (30) à l'extrémité radiale de laquellle l'appendice de déformation ou les appendices de déformation (30a) est ou sont formé(s) et est ou sont en prise avec le côté intérieur du corps du convertisseur (10) lorsqu'il(s) est ou sont en position de travail, caractérisé en ce que la plaque (30) peut basculer entre une position de repos dans laquelle elle est inclinée vers l'axe du corps (10) de convertisseur et la position de travail dans laquelle elle est redressée et perpendiculaire à l'axe du corps de convertisseur (10).

2. Convertisseur d'énergie selon la revendication 1, caractérisé en ce que chaque appendice de déformation (30a) est formé sur chaque côté de la plaque (30) par deux protubérances voisines dont les extrémités radiales sont arrondies.

3. Convertisseur d'énergie selon la revendication 1 ou 2, caractérisé en ce que chaque appendice de déformation (30a) comporte un chanfrein (36) sur les bords par lesquels il attaque la paroi du corps de convertisseur (10).

4. Convertisseur d'énergie selon l'une des revendications 1 à 3, caractérisé en ce que la plaque (30) est retenue par une pièce de guidage (34) déformable élastiquement à une position de repos dans laquelle son plan se place obliquement par rapport à l'axe du corps (10) de convertisseur et son ou ses appendice(s) de déformation (30a) est ou sont en contact avec la paroi du corps (10) de convertisseur.

5. Convertisseur d'énergie selon la revendication 4, caractérisé en ce que la plaque (30) est disposée à une position de repos dans laquelle elle est oblique par rapport à l'axe du corps (10) du convertisseur entre deux éléments de piston (14, 16) fixés à distance l'un de l'autre sur l'organe de traction ou de poussée.

6. Convertisseur d'énergie selon la revendication 5, caractérisé en ce que la plaque (30) comporte un trou central (32) dans lequel une protubérance de centrage (16a) d'une surface extrême voisine de l'un des deux éléments de piston (16) peut pénétrer par complémentarité de formes.

7. Convertisseur d'énergie selon l'une des revendications précédentes, caractérisé en ce que le corps tubulaire (10) du convertisseur est formé par le cylindre d'une commande linéaire pyrotechnique à piston et cylindre d'un tendeur de ceinture et le dispositif de déformation est disposé sur le piston de cette commande linéaire, le sens (F2) du mouvement du piston (16) étant l'inverse de celui du sens déterminé (F1) lors du déclenchement de la commande linéaire.

8. Convertisseur d'énergie selon l'une des revendications précédentes, caractérisé en ce que l'épaisseur de la paroi du corps tubulaire (10) du convertisseur croît dans le sens déterminé (F1) dans une mesure qui est déterminée par une variation prédéterminée des forces (F) devant être transmises par l'organe de traction ou de poussée (12) en fonction de la course (s) du mouvement du dispositif de déformation à l'intérieur du corps (10) du convertisseur.

9. Convertisseur d'énergie selon l'une des revendications précédentes, caractérisé en ce que le corps tubulaire (10) du convertisseur a une forme rectangulaire en coupe transversale.

10. Convertisseur d'énergie selon l'une des revendications précédentes, caractérisé en ce qu'il est dimensionné pour des forces (F) comprises dans une plage d'environ 5 000 N à environ 12 000 N qui apparaissent lors du déplacement du dispositif de déformation dans le corps tubulaire (10) du convertisseur et il est prévu en particulier pour être utilisé entre le verrou de ceinture et son point de fixation sur le véhicule.
